# FASCICULE DE BREVET EUROPEEN

(11) **EP 2 976 299 B1**
(45) Date de publication et mention de la délivrance du brevet: **21.06.2017**
(21) Numéro de dépôt: 14717204.3
(22) Date de dépôt: 20.03.2014
(51) Int. Cl.: C01G 17/00

(54) **PROCÉDÉ DE FABRICATION DE NANOTUBES D'IMOGOLITE À BASE DE GERMANIUM**
VERFAHREN ZUR HERSTELLUNG VON GERMANIUM-IMOGOLIT-NANORÖHRCHEN
METHOD FOR PRODUCING GERMANIUM IMOGOLITE NANOTUBES

(30) Priorité: 20.03.2013 FR 1352490
(43) Date de publication de la demande: 27.01.2016
(73) Titulaire: Commissariat à l'Énergie Atomique et aux Énergies Alternatives, 75015 Paris (FR); Centre National de la Recherche Scientifique (C.N.R.S.), 75016 Paris (FR)
(72) Inventeur: THILL, Antoine, F-92260 Fontenay aux Roses (FR); AMARA, Mohamed-Salah, F-91400 Orsay (FR)
(74) Mandataire: Gevers & Orès
(86) Numéro de dépôt international: PCT/IB2014/059990
(87) Numéro de publication internationale: WO 2014/147579

(56) Documents cités:
- JP-A- 2011 042 520
- MOHAMED-SALAH AMARA ET AL: "Single-step formation of micron long (OH)3Al2O3Ge(OH) imogolite-like nanotubes", CHEMICAL COMMUNICATIONS, vol. 49, no. 96, 14 octobre 2013 (2013-10-14), page 11284, XP055096196, ISSN: 1359-7345, DOI: 10.1039/c3cc46839a
- C. LEVARD ET AL: "Synthesis of Ge-imogolite: influence of the hydrolysis ratio on the structure of the nanotubes", PHYSICAL CHEMISTRY CHEMICAL PHYSICS, vol. 13, no. 32, 12 juillet 2011 (2011-07-12), page 14516, XP055095968, ISSN: 1463-9076, DOI: 10.1039/c1cp20346k
- C. LEVARD ET AL: "Formation and Growth Mechanisms of Imogolite-Like Aluminogermanate Nanotubes", CHEMISTRY OF MATERIALS, vol. 22, no. 8, 27 avril 2010 (2010-04-27) , pages 2466-2473, XP055096858, ISSN: 0897-4756, DOI: 10.1021/cm902883p
- SHIN-ICHIRO WADA ET AL: "Effects of Substitution of Germanium for Silicon in Imogolite", CLAYS AND CLAY MINERALS, vol. 30, no. 2, 1 janvier 1982 (1982-01-01), pages 123-128, XP055095969, ISSN: 0009-8604, DOI: 10.1346/CCMN.1982.0300206

## Description

La présente invention concerne un procédé de fabrication de nanotubes d'imogolite à base de germanium, ainsi que les nanotubes d'imogolite à base de germanium susceptibles d'être obtenus via ce procédé.

L'imogolite est un aluminosilicate filamenteux, tubulaire et cristallisé, répondant à la formule (OH)₃Al₂O₃SiOH. Ce minéral est présent à l'état naturel dans les cendres volcaniques et dans certains sols. Il suscite actuellement un grand intérêt du fait de ces nombreux avantages par rapport aux nanotubes de carbone : totale transparence (l'imogolite artificiel est incolore), procédés de synthèse en milieu liquide contrôlés permettant de maîtriser le diamètre des nanotubes (procédé reproductible), absence de risque d'inhalation par les manipulateurs et utilisateurs finaux, et possibilités de modification des propriétés de surface interne et externe des nanotubes d'imogolite.

Les nanotubes d'imogolite synthétique à base de silicium demeurent néanmoins difficiles à synthétiser en grande quantité. En effet, au-delà d'une concentration initiale en aluminium de 2 mmol.L⁻¹, l'imogolite est pollué par des oxydes d'aluminium. Le remplacement du silicium par du germanium permet de palier en partie aux problèmes de concentration et de pureté, et d'obtenir des nanotubes de formule (OH)₃Al₂O₃GeOH similaire aux nanotubes naturels jusqu'à des concentrations initiales en aluminium d'une mole par litre (C. Levard et al., J. Am. Chem. Soc. 2008,130, 5862-5863). Malheureusement, les nanotubes obtenus selon ce procédé sont très courts, leur longueur moyenne étant inférieure à 100 nm, là où les imogolites de silicium naturelles et synthétiques ont des longueurs de l'ordre du micron (10 fois supérieure). Or, les propriétés les plus intéressantes des nanotubes, notamment les propriétés de polarisation à la lumière ou de renfort sont liées à l'orientation en solution des nanotubes d'imogolite dans une direction privilégiée (cristaux liquides). Ces phases orientées n'apparaissent que pour des rapports d'aspect (longueur/diamètre) très supérieurs à 1.

Dans l'art antérieur, le rapport d'aspect des imogolites à base de germanium est d'environ 10 pour des concentrations possibles de l'ordre de 10⁻² g.g⁻¹. Le rapport d'aspect des imogolites à base de silicium est quant à lui de l'ordre de 500 pour des concentrations possibles de l'ordre de 10⁻⁴ g.g⁻¹. Par conséquent, aucun de ces deux systèmes ne permet d'obtenir simplement des matériaux ayant des propriétés intéressantes. Seule une étape fastidieuse de concentration permettrait de rendre utilisable un système imogolite à base de silicium.

Aussi, le problème technique à résoudre par rapport à cet état de l'art consiste en la mise au point d'une méthode de fabrication de nanotubes ayant un rapport d'aspect longueur/diamètre très élevé (supérieur ou égal à 100), en grande quantité (concentrations supérieures à 10 g.L⁻¹), et selon un procédé facile à mettre en oeuvre.

Les Inventeurs ont réussi à élaborer un procédé de fabrication de nanotubes d'imogolite à base de germanium très long (longueur supérieure ou égale à 500 nm) et avec un excellent rendement en mettant à profit la décomposition thermique de l'urée comme source homogène d'ions hydroxyles pour favoriser la croissance des nanotubes. Les Inventeurs ont en effet constaté que la production homogène d'ions hydroxyles à partir de l'urée permettait d'éviter les effets de gradient inévitables liés à l'ajout d'une base classique. Il est en effet essentiel que le pH de la solution augmente très lentement, ceci afin de contrôler la précipitation des minéraux constitutifs de l'imogolite et d'éviter la précipitation de phases parasites amorphes tel que l'oxyde de germanium. Ainsi, et contrairement aux procédés de l'art antérieur qui mettent généralement en oeuvre de la soude concentrée, l'urée ne présente pas l'inconvénient de devoir être ajouté lentement au goutte à goutte, et sous forte agitation.

Les Inventeurs ont également observé que la décomposition de l'urée produit des ions NH₄⁺ qui favorisent les interactions entre les précurseurs d'imogolite (proto-imogolites) et l'extrémité des nanotubes d'imogolite en croissance, ce qui accélère la croissance des nanotubes.

Le procédé mis au point par les Inventeurs présente en outre l'avantage de ne nécessiter aucune étape de manipulation de la solution après mélange des composants, ni aucune étape de concentration (précipitation ou centrifugation par exemple). Le procédé de l'invention est donc très simple à mettre en oeuvre et économiquement avantageux en comparaison aux procédés de l'art antérieur.

Ainsi, l'invention concerne un procédé de fabrication de nanotubes d'imogolite à base de germanium comprenant les étapes suivantes :
(i) dissolution d'un précurseur de l'aluminium dans une solution aqueuse, ladite étape de dissolution pouvant être réalisée sous agitation, et de préférence dans un récipient en téflon^{®} (polytétrafluoroéthylène) ou en verre,
(ii) sous agitation, ajout à la solution d'aluminium obtenue à l'issue de l'étape (i) d'au moins un alcoxyde de germanium dont le germanium porte au moins trois substituants hydrolysables, le rapport molaire Al/Ge devant être compris entre 1 et 3, de préférence entre 1,5 et 2,5, et encore plus préférentiellement égal à 2,
(iii) sous agitation, ajout d'une solution d'urée à la solution d'aluminogermanate obtenue à l'issue de l'étape (ii), jusqu'à obtention d'un rapport molaire urée/Al compris entre 0,5 et 3, de préférence entre 1 et 2 (bornes incluses), et encore plus préférentiellement égal à 1,5,
(iv) chauffage de la solution obtenue à l'issue de l'étape (iii) à une température supérieure à 60°C, de préférence supérieure à 100°C.

Au sens où l'entend l'invention, l'expression « substituant hydrolysable » désigne un substituant qui est susceptible de se séparer de l'atome de germanium au cours du procédé, et en particulier au cours de l'étape (iii) lors de la réaction avec la solution d'urée.

Selon un mode de réalisation avantageux, le précurseur de l'aluminium mis en oeuvre lors de l'étape (i) est choisi parmi le perchlorate d'aluminium Al(ClO₄)₃, le nitrate d'aluminium Al(NO₃)₃ ou le chlorure d'aluminium AlCl₃, le perchlorate d'aluminium Al(ClO₄)₃ étant le précurseur préféré.

La concentration en aluminium de la solution aqueuse obtenue à l'issue de l'étape (i) peut être comprise entre 0,01 et 1 mol.L⁻¹.

De manière avantageuse, l'alcoxyde de germanium ou le mélange d'alcoxydes de germanium ajoutés lors de l'étape (ii) répondent à l'une des formules Ge(OR)₄ ou XGe(OR)₃ dans lesquelles R est un groupe alkyle ou alcényle linéaire ou ramifié en C₁-C₆, ou un groupe phényle, et X est un atome d'hydrogène ou un groupe alkyle linéaire ou ramifié en C₁-C₁₂. De préférence, R représente un groupe méthyle, éthyle, propyle, butyle ou vinyle, et de manière encore plus préférée R est un groupe méthyle ou éthyle. De préférence, X est un groupe méthyle, éthyle ou propyle, et de manière encore plus préférée X est un groupe méthyle. Les alcoxydes de germanium préférés sont : le tétraéthoxygermanium Ge(OC₂H₅)₄, le tétraméthoxygermanium Ge(OCH3)4, le méthyltriéthoxygermanium (OC₂H₅)₃GeCH₃ et le méthyltriméthoxygermanium (H₃CO)₃GeCH₃.

Selon un mode de réalisation avantageux, la solution d'urée ajoutée lors de l'étape (iii) a une concentration comprise entre 0,1 et 3 mol.L⁻¹.

Le chauffage de l'étape (iv) peut être réalisé à une température comprise entre 70 et 200°C, et de préférence entre 120 et 160°C en autoclave.

Selon un mode de réalisation avantageux, la durée de l'étape (iv) de chauffage est comprise entre 4 et 6 jours.

Le procédé de l'invention peut en outre comprendre une étape (v) de lavage de la solution obtenue à l'issue de l'étape (iv). L'étape de lavage sert à éliminer du milieu réactionnel les sous-produits formés au cours des étapes (i) à (iii), tels que les ions résiduels provenant de la décomposition de l'urée mise en oeuvre lors de l'étape (iii) ou les alcools provenant de l'hydrolyse de l'alcoxyde de germanium. L'étape (v) peut donc être effectuée soit par lavage par sédimentations successives ou par dialyse, soit par concentration par ultrafiltration.

Une étape (vi) de lyophilisation ou de séchage subséquente peut également être réalisée pour obtenir les nanotubes d'imogolite à base de germanium synthétisés sous forme de poudre déshydratée.

Un autre objet de l'invention concerne les nanotubes d'imogolite à base de germanium en tant que tels, susceptibles d'être obtenus selon le procédé de l'invention, présentant un rapport d'aspect (longueur/diamètre) supérieur ou égal à 100.

Les nanotubes d'imogolite à base de germanium de l'invention présentent avantageusement une longueur supérieure ou égale à 500 nm.

De manière avantageuse, le diamètre des nanotubes d'imogolite à base de germanium de l'invention est inférieur ou égal à 5 nm. De manière encore plus avantageuse, ledit diamètre est compris entre 3 et 5 nm (bornes incluses). Les nanotubes d'imogolite à base de germanium de l'invention peuvent présenter soit une structure simple paroi, soit une structure double paroi.

Outre les dispositions qui précèdent, l'invention comprend encore d'autres dispositions qui ressortiront du complément de description qui suit, qui se rapporte à des exemples de synthèse de nanotubes d'imogolite à base de germanium selon le procédé de l'invention, ainsi qu'aux figures annexées dans lesquelles :
- la Figure 1 représente une courbe de diffusion de rayons X aux petits angles (SAXS) de nanotubes d'imogolite à base de germanium synthétisés selon l'exemple 1,
- la Figure 2 est une image par cryo-TEM de nanotubes d'imogolite à base de germanium synthétisés selon l'exemple 1 (longueur supérieure à 500 nm),
- la Figure 3 représente une courbe de diffusion de rayons X aux petits angles (SAXS) de nanotubes d'imogolite à base de germanium synthétisés selon l'exemple 2,
- la Figure 4 est une image cryo-TEM des nanotubes d'imogolite à base de germanium synthétisés selon l'exemple 2.

### PARTIE EXPÉRIMENTALE :

### Exemple 1 :

100 mL d'une solution contenant de l'aluminium et du germanium, dont le rapport molaire aluminium/germanium est fixé à 2 et le rapport molaire urée/aluminium est fixé à 1, a été préparée comme suit :
- une solution aqueuse d'aluminium à 0,2 mol.L⁻¹ est préparée dans une fiole jaugée de 50 mL par dissolution de 4,87 g de perchlorate d'aluminium dans de l'eau pure,
- une solution de 50 mL d'urée à 0,2 mol.L⁻¹ est préparée dans une fiole jaugée par dissolution de 0,6006 g d'urée.

La solution de perchlorate d'aluminium est transvasée dans un récipient en téflon^{®} contenant un barreau aimanté, puis mise sous agitation. Du tétraéthoxygermanium Ge(OC₂H₅)₄ (1110 µL) est ajouté à la solution. La solution d'urée est ensuite ajoutée. Une fois les deux solutions mélangées, le récipient en téflon^{®} est fermé hermétiquement dans un autoclave, puis placé à l'étuve à 140°C pendant 5 jours. Après 5 jours, la solution est dialysée à l'aide d'une membrane de 10 kDa jusqu'à ce que sa conductivité soit inférieure à 10 µS.cm⁻¹.

Le rendement de cette synthèse est supérieur à 80%.

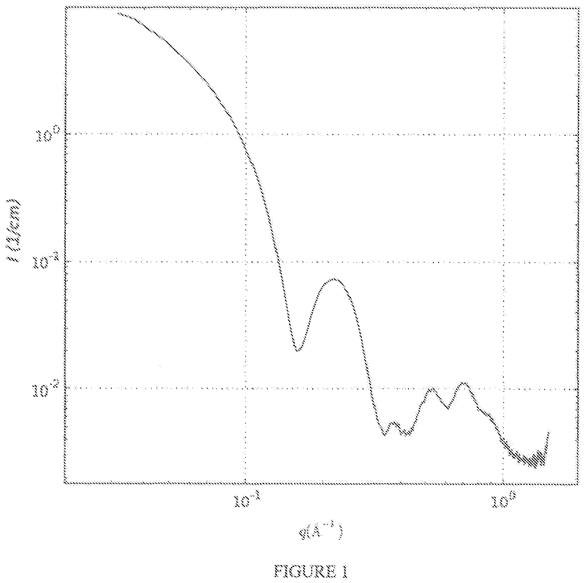

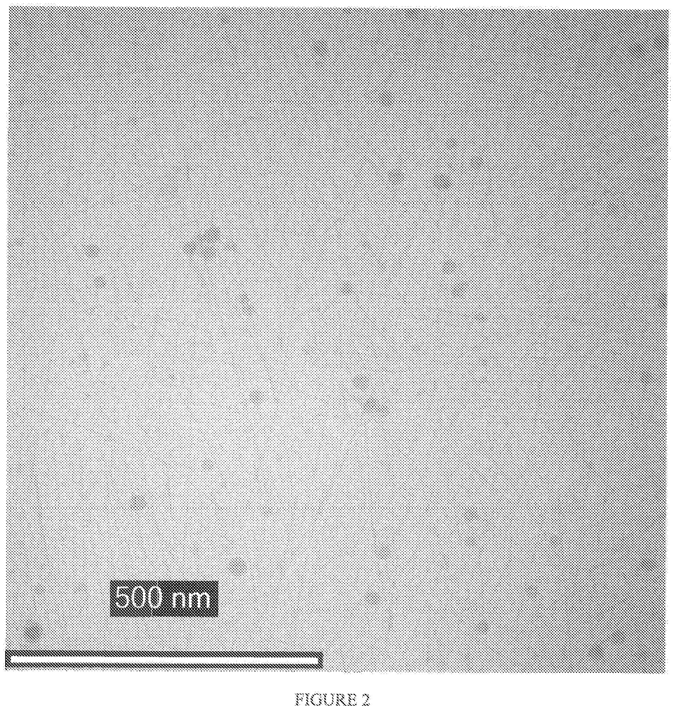

La structure tubulaire des nanotubes d'imogolite à base de germanium a été mise en évidence par SAXS (Small-Angle X-ray Scattering) et cryo-TEM (Cryogenic Transmission Electron Microscopy) sur un appareil Tecnai G² Polara (Figures 1 et 2).

Les nanotubes d'imogolite à base de germanium de l'invention ont également été observés par microscopie à force atomique (AFM) après adsorption sur du mica selon la méthode décrite par Maillet et al., Phys. Chem. Chem. Phys., 2010, afin de pouvoir mesurer leur longueur.

La courbe de diffusion des rayons X (Figure 1) met en évidence une grande homogénéité de diamètres des nanotubes d'imogolite à base de germanium. Elle met également en évidence la structure double-paroi des nanotubes, et permet de déterminer la valeur moyenne de ce diamètre, qui est de 4,4 nm.

L'image par cryo-TEM (Figure 2) montre la structure tubulaire des nanotubes d'imogolite à base de germanium, et l'absence d'autres nano-objets dans l'échantillon dialysé. On mesure une longueur moyenne des nanotubes d'imogolite à base de germanium de l'ordre de 500 nm.

A titre de comparaison, la longueur moyenne des nanotubes d'imogolite à base de germanium obtenus selon le procédé standard décrit par P. Maillet et al., J. Am. Chem. Soc. 2010, 132, 1208-1209, dont une image cryo-TEM est représentée à la Figure 1B dudit article, est de l'ordre de 40 nm.

### Exemple 2 :

2,5 mL d'une solution contenant de l'aluminium et du germanium, dont le rapport molaire aluminium/germanium a été fixé à 2 et le rapport molaire urée/aluminium a également été fixé à 2, a été préparée comme suit :
- une solution aqueuse S1 d'aluminium est préparée par dissolution de 0,585 g de perchlorate d'aluminium dans 6 mL d'eau pure afin d'obtenir une solution à 0,2 mol.L⁻¹, puis transvasé dans une fiole jaugée de 10 mL,
- une solution S2 d'urée à 0,4 mol.L⁻¹ est préparée par dissolution de 0,12 g d'urée dans 5 mL.

2,5 mL de la solution S1 de perchlorate d'aluminium est transvasée dans un récipient en téflon^{®} contenant un barreau aimanté, puis mise sous agitation. Du méthyltriéthoxygermanate (49,3 µL) est ajouté à la solution. 1,25 mL de la solution S2 d'urée est ensuite ajoutée, ainsi que 1,25 mL d'eau. Une fois l'addition terminée, le récipient en téflon^{®} est fermé et placé à l'étuve à 90°C pendant 5 jours. La solution est ensuite dialysée dans de l'eau pure en utilisant une membrane 8 kDa.

Le rendement de la synthèse après lavage est de 75%.

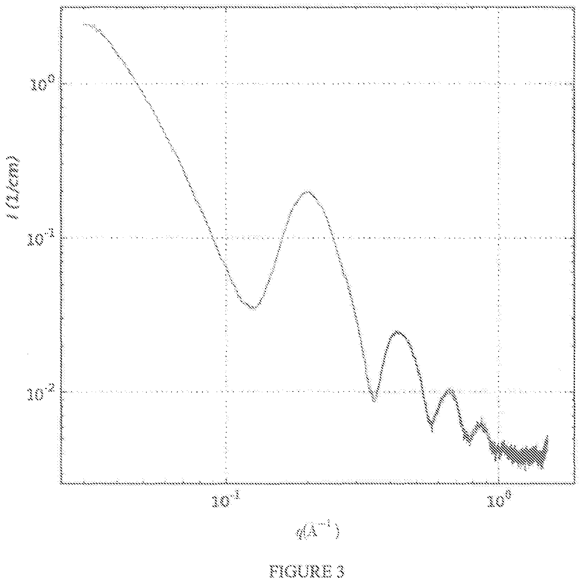

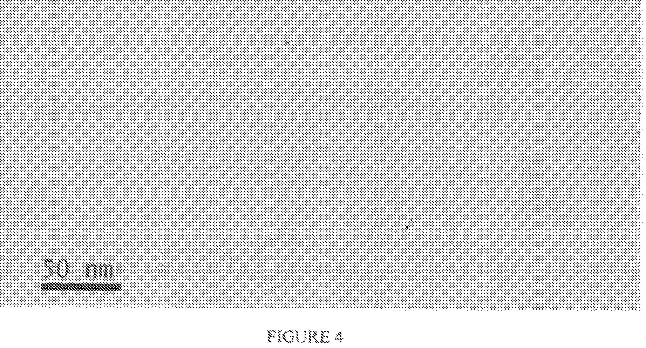

La structure tubulaire des nanotubes d'imogolite à base de germanium a été mise en évidence par SAXS (Small-Angle X-ray Scattering) et cryo-TEM (Cryogenic Transmission Electron Microscopy) sur un appareil Tecnai G² Polara (Figures 3 et 4).

Comme pour l'exemple 1 :
- la courbe de diffusion des rayons X (Figure 3) met en évidence une grande homogénéité de diamètres des nanotubes d'imogolite à base de germanium. Elle met également en évidence la structure simple paroi des nanotubes, et permet de déterminer la valeur moyenne de ce diamètre qui est de 3,6 nm ;
- l'image par cryo-TEM (Figure 4) montre la structure tubulaire des nanotubes d'imogolite à base de germanium, et l'absence d'autres nano-objets dans l'échantillon dialysé.

## Revendications

1. Procédé de fabrication de nanotubes d'imogolite à base de germanium, **caractérisé en ce qu'**il comprend les étapes suivantes :
(i) dissolution d'un précurseur de l'aluminium dans une solution aqueuse,
(ii) sous agitation, ajout à la solution d'aluminium obtenue à l'issue de l'étape (i) d'au moins un alcoxyde de germanium dont le germanium porte au moins trois substituants hydrolysables, le rapport molaire Al/Ge devant être compris entre 1 et 3,
(iii) sous agitation, ajout d'une solution d'urée à la solution d' aluminogermanate obtenue à l'issue de l'étape (ii), jusqu'à obtention d'un rapport molaire urée/Al compris entre 0,5 et 3,
(iv) chauffage de la solution obtenue à l'issue de l'étape (iii) à une température supérieure à 60°C.

2. Procédé selon la revendication 1, dans lequel le précurseur de l'aluminium est choisi parmi le perchlorate d'aluminium Al(ClO₄)₃, le nitrate d'aluminium Al(NO₃)₃ ou le chlorure d'aluminium AlCl₃.

3. Procédé selon la revendication 1 ou la revendication 2, dans lequel la concentration en aluminium de la solution aqueuse obtenue à l'issue de l'étape (i) est comprise entre 0,01 et 1 mol.L⁻¹.

4. Procédé selon l'une des revendications 1 à 3, dans lequel l'alcoxyde de germanium répond à l'une des formules Ge(OR)₄ ou XGe(OR)₃ dans lesquelles R est un groupe alkyle ou alcényle linéaire ou ramifié en C₁-C₆, ou un groupe phényle, et de préférence R représente un groupe méthyle ou éthyle, et X est un atome d'hydrogène ou un groupe alkyle linéaire ou ramifié en C₁-C₁₂, et de préférence X est un groupe méthyle.

5. Procédé selon la revendication 4, dans lequel l'alcoxyde de germanium est choisi parmi le tétraéthoxygermanium Ge(OC₂H₅)₄, le tétraméthoxygermanium Ge(OCH₃)₄, le méthyltriéthoxysilanegermanium (OC₂H₅)₃GeCH₃ et le méthyltriméthoxygermanium (H₃CO)₃GeCH₃.

6. Procédé selon l'une des revendications 1 à 5, dans lequel le rapport molaire Al/Ge lors de l'étape (ii) est compris entre 1,5 et 2,5.

7. Procédé selon l'une des revendications 1 à 6, dans lequel la solution d'urée a une concentration comprise entre 0,1 et 3 mol.L⁻¹,

8. Procédé selon l'une des revendications 1 à 7, dans lequel le rapport molaire urée/Al est compris entre 1 et 2 (bornes incluses).

9. Procédé selon l'une des revendications 1 à 8, dans lequel l'étape (iv) de chauffage est réalisée à une température comprise entre 70 et 200°C, de préférence entre 120 et 160°C, et encore plus préférentiellement pendant une durée comprise entre 4 et 6 jours.

10. Procédé selon l'une des revendications 1 à 9, **caractérisé en ce qu'**il comprend une étape (v) de lavage de la solution obtenue à l'issue de l'étape (iv).

11. Procédé selon l'une des revendications 1 à 10, **caractérisé en ce qu'**il comprend une étape (vi) de lyophilisation ou de séchage.

12. Nanotubes d'imogolite à base de germanium susceptibles d'être obtenus selon le procédé des revendications 1 à 11, **caractérisés en ce qu'**ils présentent un rapport d'aspect (longueur/diamètre) supérieur ou égal à 100.

13. Nanotubes hybrides d'imogolite selon la revendication 12, **caractérisés en ce qu'**ils présentent une longueur supérieure ou égale à 500 nm.

14. Nanotubes hybrides d'imogolite selon la revendication 12 ou la revendication 13, **caractérisés en ce qu'**ils présentent un diamètre compris entre 3 et 5 nm (bornes incluses).

15. Nanotubes hybrides d'imogolite selon l'une des revendications 12 à 14, **caractérisés en ce qu'**ils présentent une structure simple paroi ou une structure double paroi.

## Patentansprüche

1. Verfahren zur Herstellung von Nanoröhrchen aus Imogolit auf der Grundlage von Germanium, **dadurch gekennzeichnet, dass** es die folgenden Schritte umfasst:
(i) Lösen eines Vorläufers von Aluminium in einer wässrigen Lösung,
(ii) unter Rühren, Zugeben zur Lösung aus Aluminium, die am Ausgang von Schritt (i) erhalten wurde, von mindestens einem Germaniumalkoxid, von dem das Germanium mindestens drei hydrolysierbare Substituenten trägt, wobei das Molverhältnis Al/Ge im Bereich zwischen 1 und 3 liegen muss,
(iii) unter Rühren, Zugeben einer HarnstoffLösung zur Aluminogermanat-Lösung, die am Ausgang von Schritt (ii) erhalten wurde, bis zum Erhalt eines Molverhältnisses Harnstoff/Al, das im Bereich zwischen 0,5 und 3 liegt,
(iv) Erhitzen der Lösung, die am Ausgang von Schritt (iii) erhalten wurde, auf eine Temperatur von mehr als 60 °C.

2. Verfahren nach Anspruch 1, wobei der Vorläufer von Aluminium ausgewählt ist aus Aluminiumperchlorat Al(ClO₄)₃, Aluminiumnitrat Al(NO₃)₃ oder Aluminiumchlorid AlCl₃.

3. Verfahren nach Anspruch 1 oder Anspruch 2, wobei die Aluminiumkonzentration der wässrigen Lösung, die am Ausgang von Schritt (i) erhalten wurde, im Bereich zwischen 0,01 und 1 mol.L⁻¹ liegt.

4. Verfahren nach einem der Ansprüche 1 bis 3, wobei das Germaniumalkoxid einer der Formeln Ge(OR)₄ oder XGe(OR)₃ entspricht, in denen R eine Akyl- oder Alkenylgruppe, linear oder verzweigt in C₁-C₆, oder eine Phenylgruppe ist, und vorzugsweise R eine Methyl- oder Ethylgruppe darstellt, und X ein Wasserstoffatom oder eine Alkylgruppe, linear oder verzweigt in C₁-C₁₂, und vorzugsweise X eine Methylgruppe ist.

5. Verfahren nach Anspruch 4, wobei das Germaniumalkoxid ausgewählt ist aus Tetraethoxygermanium Ge(OC₂H₅)₄, Tetramethoxygermanium Ge(OCH₃)₄, Methyltriethoxysilangermanium (OC₂H₅)₃GeCH₃ und Methyltrimethoxygermanium (H₃CO)₃GeCH₃.

6. Verfahren nach einem der Ansprüche 1 bis 5, wobei, das Molverhältnis Al/Ge bei Schritt (ii) im Bereich zwischen 1,5 und 2,5 liegt.

7. Verfahren nach einem der Ansprüche 1 bis 6, wobei der Harnstoff eine Konzentration aufweist, die zwischen 0,1 und 3 mol.L⁻¹ liegt.

8. Verfahren nach einem der Ansprüche 1 bis 7, wobei das Molverhältnis Harnstoff/Al im Bereich zwischen 1 und 2 (Grenzen eingeschlossen) liegt.

9. Verfahren nach einem der Ansprüche 1 bis 8, wobei der Schritt (iv) des Erhitzens bei einer Temperatur durchgeführt wird, die im Bereich zwischen 70 °C und 200 °C liegt, vorzugsweise zwischen 120 und 160 °C und noch bevorzugter während einer Dauer im Bereich zwischen 4 und 6 Tagen.

10. Verfahren nach einem der Ansprüche 1 bis 9, **dadurch gekennzeichnet, dass** es einen Schritt (v) des Waschens der Lösung, die am Ausgang von Schritt (iv) erhalten wurde, umfasst.

11. Verfahren nach einem der Ansprüche 1 bis 10, **dadurch gekennzeichnet, dass** es einen Schritt (vi) des Lyophilisierens oder des Trocknens umfasst.

12. Nanoröhrchen aus Imogolit auf der Grundlage von Germanium, die gemäß dem Verfahren von Anspruch 1 bis 11 erhalten werden können, **dadurch gekennzeichnet, dass** sie ein Seitenverhältnis (Länge/Durchmesser) von mehr als oder gleich 100 aufweisen.

13. Hybride Nanoröhrchen aus Imogolit nach Anspruch 12, **dadurch gekennzeichnet, dass** sie eine Länge von mehr als oder gleich 500 nm aufweisen.

14. Hybride Nanoröhrchen aus Imogolit nach Anspruch 12 oder Anspruch 13, **dadurch gekennzeichnet, dass** sie einen Durchmesser aufweisen, der im Bereich zwischen 3 und 5 nm (Grenzen eingeschlossen) liegt.

15. Hybride Nanoröhrchen aus Imogolit nach einem der Ansprüche 12 bis 14, **dadurch gekennzeichnet, dass** sie eine Struktur mit einer einfachen Wand oder eine Struktur mit einer doppelten Wand aufweisen.

## Claims

1. A method for manufacturing imogolite nanotubes based on germanium, **characterised in that** it comprises the following steps:
(i) dissolving an aluminium precursor in an aqueous solution,
(ii) under agitation, adding, to the aluminium solution obtained at the end of step (i), at least one germanium alkoxide, the germanium of which carries at least three hydrolysable substituents, the Al/Ge molar ratio having to be between 1 and 3,
(iii) under agitation, adding a urea solution to the aluminogermanate solution obtained at the end of step (ii), until an urea/Al molar ratio of between 0.5 and 3 is obtained,
(iv) heating the solution obtained at the end of step (iii), to a temperature above 60°C.

2. Method according to claim 1, wherein the aluminium precursor is chosen from aluminium perchlorate Al(ClO₄)₃, aluminium nitrate Al(NO₃)₃ or aluminium chloride AlCl₃.

3. Method according to claim 1 or claim 2, wherein the concentration of aluminium in the aqueous solution obtained at the end of step (i) is between 0.01 and 1 mol.l⁻¹.

4. Method according to one of claims 1 to 3, wherein the germanium alkoxide has one of the formulae Ge(OR)₄ or XGe(OR)₃ wherein R is a C₁-C₆ linear or branched alkyl or alkenyl group, or a phenyl group, and preferably R represents a methyl or ethyl group, and X is a hydrogen atom or a C₁-C₁₂ linear or branched alkyl group, and preferably X is a methyl group.

5. Method according to claim 4, wherein the germanium alkoxide is chosen from tetraethoxygermanium Ge(OC₂H₅)₄, tetramethoxygermanium Ge(OCH₃)₄, methyltriethoxysilanegermanium (OC₂H₅)₃GeCH₃ and methyltrimethoxygermanium (H₃CO)₃GeCH₃.

6. Method according to one of claims 1 to 5, wherein the Al/Ge molar ratio during step (ii) is between 1.5 and 2.5.

7. Method according to one of claims 1 to 6, wherein the urea solution has a concentration of between 0.1 and 2 mol.l-¹.

8. Method according to one of claims 1 to 7, wherein the urea/Al molar ratio is between 1 and 2 (inclusive).

9. Method according to one of claims 1 to 8, wherein the heating step (iv) is carried out at a temperature of between 70°C and 200°C, preferably between 120°C and 160°C, and even more preferentially for a period of between 4 and 6 days.

10. Method according to one of claims 1 to 9, **characterised in that** it comprises a step (v) of washing the solution obtained at the end of step (iv).

11. Method according to one of claims 1 to 10, **characterised in that** it comprises a lyophilisation or drying step (vi).

12. Imogolite nanotubes based on germanium, able to be obtained according to the method of claims 1 to 11, **characterised in that** they have an aspect ratio (length/diameter) greater than or equal to 100.

13. Hybrid imogolite nanotubes according to claim 12, **characterised in that** they have a length greater than or equal to 500 nm.

14. Hybrid imogolite nanotubes according to claim 12 or claim 13, **characterised in that** they have a diameter of between 3 and 5 nm (inclusive).

15. Hybrid imogolite nanotubes according to one of claims 12 to 14, **characterised in that** they have a single-wall structure or a double-wall structure.
